(19)

**Europäisches Patentamt**
**European Patent Office**
**Office européen des brevets**

(11)  **EP 1 567 457 B1**

(12)  **EUROPEAN PATENT SPECIFICATION**

(45) Date of publication and mention
of the grant of the patent:
**24.04.2013 Bulletin 2013/17**

(21) Application number: **03812204.0**

(22) Date of filing: **05.12.2003**

(51) Int Cl.:
**C03B 37/018** (2006.01)   **C03B 37/029** (2006.01)

(86) International application number:
**PCT/FI2003/000934**

(87) International publication number:
**WO 2004/050572 (17.06.2004 Gazette 2004/25)**

(54) **METHOD AND APPARATUS FOR MAKING OPTICAL FIBRES**

VERFAHREN UND VORRICHTUNG ZUR HERSTELLUNGVON LICHTLEITFASERN

PROCEDE ET APPAREIL POUR PRODUIRE DES FIBRES OPTIQUES

(84) Designated Contracting States:
**AT BE BG CH CY CZ DE DK EE ES FI FR GB GR HU IE IT LI LU MC NL PT RO SE SI SK TR**

(30) Priority: **05.12.2002  FI 20022162**

(43) Date of publication of application:
**31.08.2005 Bulletin 2005/35**

(73) Proprietor: **Nextrom Oy**
**01510 Vantaa (FI)**

(72) Inventors:
• **HOVINEN, Anssi**
**FIN-02730 Espoo (FI)**
• **KESÄLÄ, Janne**
**FIN-02280 Espoo (FI)**

• **SOININEN, Pekka**
**FIN-00100 Helsinki (FI)**

(74) Representative: **Sundman, Patrik Christoffer et al**
**Seppo Laine Oy**
**Itämerenkatu 3 B**
**00180 Helsinki (FI)**

(56) References cited:
**DE-A1- 3 731 345        US-A- 4 174 842**
**US-A1- 2003 041 628     US-B1- 6 192 715**

• **PATENT ABSTRACTS OF JAPAN vol. 006, no. 239 26 November 1982 & JP 57 140 330 A (NIPPON DENSHIN DENWA KOSHA ET AL) 30 August 1982**

**Description**

**Background of the Invention**

**Field of the Invention**

The present invention relates to the manufacture of optical fibres. In particular, the invention concerns a method according to the preamble of claim 1 of subjecting a glass preform to processing by tensile forces in a heating oven for making optical fibres or for stretching of the glass perform into a form suitable for fibre manufacture.

The present invention can be used also in other preform-making processes and equipment thereof, like in MCVD lathes and sintering furnaces, as defined in the preamble of claim 27.

Generally, the present invention can be utilised in a large variety of processes for heat-treatment of glass substrates, in which the glass substrate is placed in the first gas space of a heat treatment zone, surrounded by a second, ambient gas space, said heat treatment zone being provided with gas conduits between and preferably interconnecting the first and the second gas spaces. Typically, in the heat-treatment processes the gas conduits comprise rotary joints. Treatment is carried out at moderate to high temperatures (over 300 °C, in most cases over 1000 °C, frequently over 1500 °C). The gas atmospheres (i.e. the composition of the gas spaces) on both sides of the gas conduits are different. Often there is a pressure difference (of up to 1000 mbar, preferably up to 100 mbar) between the atmosphere prevailing inside the equipment employed for processing of the preforms and the atmosphere prevailing outside it.

The present invention is also concerned with an apparatus according to the preamble of claim 17 for processing of glass performs.

**Description of Related Art**

In the manufacture of optical fibres, a glass preform, comprising, for example, a layered glass structure, is drawn through a furnace having a jacket defining an elongated heating chamber, with a vertically or horizontally oriented central axis, in which the preform is heated to temperatures in the range of about 1800 to 2200 °C in order to soften the glass. In practice, furnaces having either ZrO or graphite resistances (resistance heating or induction heating) are used. In both cases, at the inlet opening, through which the, for example, vertically suspended glass preform extends into the oven, a seal is provided. The seal can comprise a mechanical ring, such as a mechanical iris structure, which will reduce the clearing between the inlet orifice and the exterior walls of the preform.

With furnaces having ZrO resistances, the processing can be carried out in ambient atmosphere and the sealing efficiency of the inlet orifice is not critical. Nor is there any particular need for minimizing the clearing between the glass preform and the inner surface of the inlet opening. However, these furnaces are hampered by the considerable disadvantage that the constructions are destroyed, if they is allowed to cool down during operation. Thus, particularly difficult situations may arise during power failures and similar malfunctions.

The second heating oven, viz. the graphite furnace, is used more extensively. In order to avoid burning the graphite, the graphite parts of the furnace should be kept in a protective atmosphere at temperatures over 500 °C. It can be noted that not only is it expensive to renew the graphite resistances, which have been burnt, but glowing and smoking graphite also causes formation of particles that weakens the properties of the fibre. Therefore, in case of graphite furnaces, an essential part in controlling the protective atmosphere is the provision of an efficient sealing 1) between the glass preform, which is fed into the furnace, 2) inside the furnace, and 3) between the drawn fibre/preform and the outlet of the furnace body, respectively. So far, there has been no proper way of controlling these seals.

Another type of preform process is MCVD (Modified Chemical Vapour Deposition), where the reactant gases are fed through rotary joints into a substrate tube (a quartz tube) used for producing the quartz part of the glass preform used for making optical fibres. The gases are fed into the MCVD lathe at elevated temperature and, for avoiding condensation problems, the rotary joints have to be heated up to 300 °C or more. The purpose of the rotary joints is to block the spread of process gases to the room atmosphere. An example of a process gas of this kind is chlorine. Further, the ambient air (room air) always contains some water and other impurities, which may cause defects in the product, if they were allowed to contact the substrate tube or the reactant gases inside the MCVD lathes during processing. A typical example of this kind of effect is the well-known attenuation caused by a water peak in the quartz core of an optical fibre.

In the existing MCVD technology, o-rings or ferrofluids are used for sealing the rotary joints to prevent flow of gases from the inside of the lathe to the ambient air. There are a number of problems related to the known technical solutions. Thus, at the harsh conditions of the processing, o-rings do not withstand more than 1-5 process runs and, in case of a leak, the product might be damaged. Ferrofluids are very expensive materials and there are only limited experiences on their use at elevated temperatures.

A third example of a typical preform processing method within the scope of the present invention is the sintering process. This process is used, for example, after an OVD or OVD process for sintering (densification) of the soot into solid material. In this process, the preform is fed through a furnace heating zone, where the sintering take place. For obtaining a more homogeneous result, the preform is rotated, and rotary joints are formed between the parts of the equipment, which are subjected to relative motion with respect to each other. During sintering, the furnace atmosphere is controlled and it might contain harmful gases, like chlorine. Also any water stemming from the ambient atmosphere has to be blocked out. The rotary joints have to work with both axial and rotational movement at the same time. Conventionally, this has been solved by using plates of graphite or other materials and, additionally, by installing a hood around the joint for capturing any Cl2 molecules. These constructions are unrealiable, they do not block off water well, there is risk that chlorine will emerge into the atmosphere and they will cause the formation of harmful particles in the furnace.

Various mechanical seals are disclosed in JP Published Patent Application No. 55 020260, US Patent No. 4,477,274, DE Patents Nos. 3 903 466 and 4 006 839, wherein dragging elastomer or graphite seals are described. These seals fit snugly against the preform during drawing of the fibre.

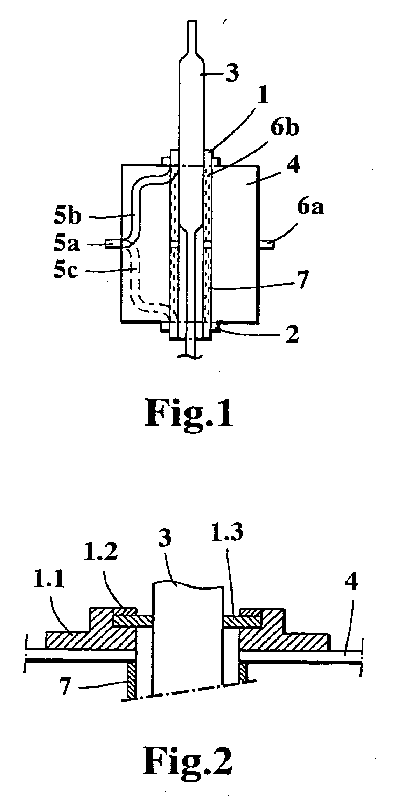

A typical mechanical sealing of the kind mentioned above is also shown in the attached Figure 2. In the figure, reference numeral 1 stands for the supporting block of the iris, 1.2 designates the clamping ring of a sealing felt (reference numeral 1.3), and number 3 stands for a glass preform and 4 for the furnace body.

Further mechanical sealing constructions comprise suspended quartz plates used for sealing the feed opening.

It has been suggested to rotate the preform about is central axis during fibre drawing. The rotation provides advantages in terms of controllability of the process, evenness of heating, thickness measurement. However, any ovality of the preform may - in combination with the dragging seals - impair the rotational movement of the preform and, therefore, also the drawing of the fibre as well as the stretching of the preform. Further, particles released from the polymer or graphite materials may contaminate the fibre.

As mentioned above, seals based on mechanical contact with the preform cause contamination of as well as scratches and other defects on the surface of the preform. Instead of elastomer seals, which chemically are highly durable sealing materials, sealing materials that withstand high temperatures must be used. Typically used seals, which are based on graphite felt (see above) or quartz wool, also allow for penetration of oxygen into the furnace and they are subjected to considerable wear. This can be explained by the fact that there is no return flow from the inside of the heating chamber to the outside through the seal that would resist the diffusion generated, or at least it is very difficult to form such a flow in a porous or not completely tight sealing. A narrow slot, the length of which is on the same order as the free travel of a molecule, can be examined in terms of a vacuum, because a vacuum can be defined a space, where the free travel of the molecule is higher than the distance between the walls. In vacuum, the molecule continues its linear travel between the walls without meeting the oncoming molecule. Thus, an oxygen molecule, for example, that has entered the slot, advances through the slot, once it has gone there. This phenomenon also explains the known fact that molecules are also diffused through a porous wall in the direction of higher pressure. In this light, it is easy to understand that the sealing is either completely tight or it allows a diffusion flow to penetrate, which is difficult to prevent by means of over pressure or other methods. To solve this problem, other means have to be introduced.

In the art, changing the flow of the protective gas has been considered as a solution of the above problem. Thus, US Patents Nos. 4,174,842, 5,970,083 and 5,897,681 and JP Published Patent Application No. JP 60 081039, for example, suggest increasing the gas flow. By this approach, diffusion of oxygen inside the furnace can be decreased, but the particular problem of this solution is that it considerably increases the consumption and expense of inert gas. In fact, when testing non-contacting solutions, extremely high sealing flows have been employed (over 100 standard litre per minute, in the following abbreviated "SLM") and small changes in the structural parts of the whole apparatus have caused surprising failures of seals. In some cases, graphite resistances have deliberately been allowed to be destroyed and they have been changed at a few week intervals. This has been used at least in stretching the preform, and the contaminated preform must have then been cleaned separately.

In JP 57/140330, inactive gas generally different than that of the inert gas in the furnace is sprayed outside the inlet and outlet of the furnace upwards and downwards, respectively, in order to form a seal to the inlet and the outlet. This makes the flow of gas unpredictable in the vicinity of the openings and gives rise to unnecessarily high gas consumption.

US 6192715 discloses a method, which involves using a secondary pressure chamber below the furnace chamber in order to prevent ambient gas from entering the furnace from below. The method is based only on controlling the pressure difference in the secondary chamber.

As will become apparent from the above description of the related art, so far there has not been any proper understanding of the overall heating process of or of the importance of a providing a proper distribution of the flow inside a inductive furnace for glass preforms. Furthermore, the sealing solutions of such furnaces have been separately developed based on individual tests of the various parts. Consequently, even small changes, for example, in the diameter of the preform will give rise to a need for a completely new series of tests before the furnace can be taken into operation.

The controllability in all basic types has been made even more difficult by changes in the geometry of the preforms, handlers and substrate tubes, such as changes in the thickness, an oval or bowed shape and deflections.

In some cases, it is sufficient to protect one atmosphere from the influence of the atmosphere on the other side of a sealing/rotary joint. However, in many cases there is great need for separating the atmospheres from each other and this aim has also to be performed by the sealing.

As explained above, the difficulties mentioned above are aggravated, when the preform is rotated during the process.

## Summary of the Invention

It is an object of the present invention to eliminate the drawbacks of the known technology and to provide a new solution for sealing furnaces used in drawing of optical fibres and stretching of glass preforms and similar operations related to the manufacture of optical fibres.

The invention is based on the idea of maintaining the concentration of gaseous impurities in the heating oven essentially on the same level as the concentration of the same impurities in the inert gas fed into the oven. Further, there is then established a diffusion barrier against the inflow of undesired gaseous components from the ambient air, driven by the forces of diffusion, by generating a laminar barrier flow of inert gas in the inlet opening of the heating oven, said barrier flow having a direction of flow, which is generally opposite to the direction of the diffusion. Thus, in an apparatus according to the present invention, there is formed at least one, preferably as many diffusion barrier zones as there are openings in the furnace chamber. The diffusion barrier will allow the penetration of impurities only in an amount, which will not essentially increase the concentration of impurities in the furnace. Such an increase is preferably less than 10 %, in particular less than 5 %, of the concentration due to the presence of impurities in the protective gas fed into the furnace.

It is possible to make a two-way construction based on the above basic concept. Thus, in a heat processing equipment used in production and processing of preforms for optical fibres, there can be one laminar barrier flow preventing process gases from escaping (diffusing) out of the furnace and another barrier flow preventing ambient atmosphere gases from diffusing into the furnace.

This technical solution is, in particular, carried out first by the invention in a method of subjecting a glass preform (work piece) to processing by tensile forces in a furnace to produce a glass product of predetermined shape, wherein at least a part of the glass preform is introduced into the heating oven through an inlet opening, a portion of the glass preform introduced into the heating oven is heated to above the softening point of the glass, the heated portion of the glass preform is subjected to tensile forces in a drawing direction to process the preform into the predetermined shape, the processed portion of the preform having the predetermined shape is drawn from the furnace through an outlet opening, and the softening portion of the preform and at least a part of the processed portion of the preform are flushed in the furnace with inert gas fed into the furnace through a feed opening.

Generally, the process can be applied to any heat treatment process of glass substrates, by forming a diffusion barrier in at least one gas conduit interconnecting the gas space inside the heat treatment device with the ambient atmosphere to seal off the conduit against flow of gas in at least one direction through the conduit.

In addition to the embodiment discussed in detail above, the general method can be carried out in connection with the feeding of process gases into a rotating substrate tube used for producing MCVD preforms. The technical solution can, also, be performed as a manner of sealing off process gases and ambient air when sintering soot processed preforms.

More specifically, the method and process according to the present invention are mainly characterized by what is stated in claims 1 and 27, respectively.

The apparatus according to the invention is characterized by what is stated in claim 17.

The present invention provides considerable advantages. Thus, the solution according to the invention can be used in the manufacture of optical fibre, such as MCVD, PVD, stretching, collapsing, sintering, sleeving of glass blanks, which in the following are also called "preforms", in the processes mentioned above and in various furnaces needed for their combination processes and in a fibre drawing furnace. The invention can be used to provide non-contacting sealing, the consumption of protective gas can be optimised and the number of exact parts minimized by the method described in the invention and, furthermore, it enables simultaneous rotation of the preform. It can be one way or two direction type and it can be used at all temperatures as well as with all gases. The protective gas can be inert or active but it has to be suitable for the specific case. The invention combines and integrates the gas feeding system, the washing or flushing flow of the furnace, the chimney effect, the upper opening (also called the "upper iris", the lower opening (also called the "lower iris", and their physical dimensions.

Thus, the effect of any changes in one part of the whole can be observed and, correspondingly, compensated for in the other parts of the system or by changing the operation or flow distribution or gas feed points of the apparatus. As a result, the number of practical training cycles needed also decreases considerably.

The solution according to the invention provides at least the following advantages:

In combination: non-contacting sealing and use of perform rotation especially in graphite furnaces. The invention will increase the working life of the furnace, in particular or the graphite resistances, and it will reduce the need for regular maintenance of the furnace. In view of the fact that there is less dust and powder (particles) formed by oxidation of the graphite resistances, cleanliness will grow. Importantly, the consumption of protective gas will be decreased compared to the present technical solutions. The flow directions can be changed as desired and the constructional parts of the equipment can be made simple and loosely fitting allowing for a wide variation of the dimensioning.

Furthermore, the invention will provide for transfer of impurities, which are obtained by a selection of the chimney effect, the distribution of flow carried out by means of conductance and the feed point of the protective gas, to an area that is more advantageous for the end product. Below are disclosed various methods of calculating the number of flows, of calculating the chimney effect, of calculating the flow rates and directions in the aggregates. These can be efficiently utilized for the design on new equipment for processing of performs both during stretching and during fibre drawing. The methods allow for dimensioning of the gas feed nozzles.

The present invention discloses methods of defining the velocity of the sealing flow required by the diffusion for each level of cleanliness and sealing distance, as well as methods for dimensioning the aggregates and flows by using the methods mentioned above.

By using the present invention the gas flows can be designed to separate two gas volumes from each other not only in stationary system but also - and importantly, when there are rotation-, axial- and radial movements involved.

## Brief Description of the Drawings

In the following, the invention will be examined in detail with the aid of a detailed description and with reference to the appended drawings.

Figure 1 shows in a schematic fashion the side-view of a process furnace with a preform and its key parts;
Figure 2 shows a similar side-view of the cross-section of a typical modern solution for sealing the furnace;
Figure 3 shows the cross-section of a sealing situation implemented according to the invention;
Figure 4 shows in side-view the advance of a diffusion barrier;
Figure 5 shows the distribution of a flow of protective gas in a cold furnace or in a horizontal furnace (simple case with one feeding point; c1, c2 and c3 can comprise several subconductances);
Figure 6 shows a gas flow caused by the chimney effect; -
Figure 7 shows combined duct flows and protective gas flows;
Figure 8 shows some iris solutions according to the invention;
Figure 9 shows a preferred embodiment of the invention;
Figure 10 shows a horizontal section of the embodiment of the previous drawing;

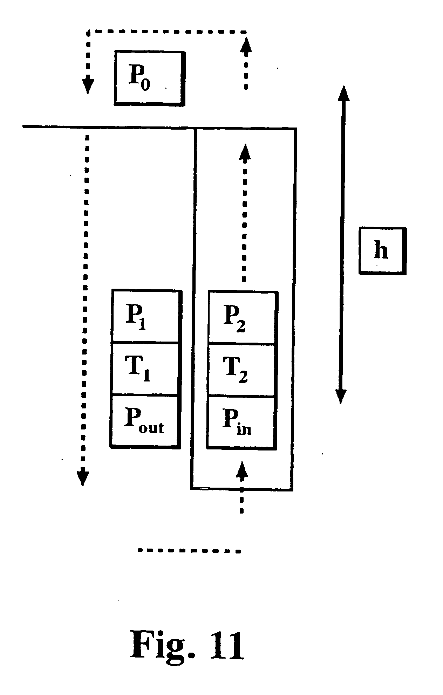

Figure 11 shows in a schematic fashion the basic flows involved with a chimney effect;
Figure 12 shows in a schematic fashion the intermediate stage of a process for stretching of a preform
Figure 13 shows the phase in which the handler of the preform is shoved inside the furnace,
Figure 14 shows the end phase of the process, in which sealing occurs between the handler and the collar,
Figure 15 shows in a schematic fashion in sideview the cross-section of a rotary joint construction for MCVD/PVD substrate tube, and
Figure 16 gives a similar view of a joint for a sintering furnace..

## Detailed Description of the Invention

As discussed above, in the solution according to the invention, any unwanted gaseous molecule contents can be kept outside a volume (e.g., a furnace) by using a flow of inert gas to form a diffusion seal. According to the invention, the content of residual is accepted to correspond essentially to (e.g. being slightly in excess of) the level of impurity of the protective gas, for example, and a sealing flow opposite to the diffusion is arranged by means of the sealing flow, forming a sufficient diffusion seal by means of the sealing distance used. The target concentration of the impurities is typically less than 100 ppm, in particular about 1 to 90 ppm, which can correspond to an excess of 10 %, preferably 5 %, or less of the concentration of impurities in the protective gas.

The protective gas used in the present invention can be any inert gas, which is lighter or heavier than air. Typically nitrogen is employed. Argon is more expensive, but it has been found that the consumption of the argon gas is smaller than of nitrogen, which will compensate at least to some extent for the added cost of the gas. Argon has a higher density than air and it will therefore more efficiently revert the chimney flow, as will be explained below.

Various technical gases and gas mixtures, such as air, which has been deoxygenized, can also be employed.

It is important that the sealing gas (or gas mixture) does not harm protected gas volumes (at MCVD the gas can be 02).

The invention comprises a furnace assembly having aggregates, which use flows and structural parts that are designed so that the distribution of gases is taken into account in the proportions of conductances, non-contacting sealing by means of a diffusion barrier (sealing condition), possible flow rate and direction of flow over the aggregate conductances, provided by a chimney effect, and combining the above-mentioned flows to define the sealing distances needed. By selecting the actual feed point, it is also possible to control the formation of diffusion barriers in the furnace.

As will be explained in more detail below, it is particularly advantageous to design the apparatus in such a way that the opening inlet - in particular the upper opening has a diameter which essentially corresponds to the diameter of the furnace tube (the graphite tube).

In practice, and as will be examined in more detail below, it is preferable that in a vertical furnace, the lower iris (lower inlet opening) is wider than the upper iris (a higher conductance). In that case, the upper iris mainly defines the volume of the duct flow (a hatch), and the sealing flow of the lower iris is defined so that it forms a sufficient sealing at the set dimensions. The sealing condition in the upper iris must also be valid, but the duct flow added into the upward component of the protective gas flow is generally so big that the sealing condition is valid for constructions that are sufficiently constricting. For example, the slot of the upper iris should be on a preform of 0.1 to 10 mm, in order for the chimney effect to be suitable. A sealing distance of about 0.5 to 100 mm with reasonable flow levels seems to be enough for the lower iris.

A first preferred embodiment of the invention is shown in Figure 1, in which the following reference numerals are used:

1. upper iris
2. lower iris
3. preform having a generally tapered shaped towards one of its end, that end being positioned upwards or downwards,
4. oven chamber
5a gas inlet <u>nozzle</u> of the protective gas
5b gas inlet <u>nozzle</u> piping of the protective gas
5c feed <u>nozzle</u> piping of the protective gas
6a outlet <u>nozzle</u> of the gas flush flow of the oven
6b nozzle for the flush gas for feeding gas inside the oven tube
7 oven tube

In the construction according to the figure, which construction can also be positioned in other directions, such as horizontally, the nozzles of the furnace (or "heating oven"), marked with reference numerals 1, 2, 5 and 7, have been dimensioned such that a diffusion barrier flow is formed in each of them to warrant for sufficient purity. The calculation of the rate of this diffusion barrier flow and the required length of the barrier distances will be discussed below.

The actual furnace space is formed by an inner portion of the furnace heating tube 7, wherein the part of the preform, which is to be heated, is positioned. The oven heating tube 7 is typically manufactured from graphite and it is heated by means of electric current. This electric current comprises current generated either by induction or by galvanic coupling. The intermediate space between the oven heating tube 7 and the oven chamber 4 is reserved for insulation and, in the case of an induction oven, also for an induction coil. The oven chamber 4 is typically water-cooled.

Protective gas is fed into the oven via <u>inlet nozzle</u> 5a, from which it is further conducted via <u>inlet nozzle piping</u> 5b to the desired location within the oven. The gas can also be fed through the iris construction or it can be fed at several positions (<u>inlet nozzle pipings</u> 5b, 5c etc), the gas flow being split up at predetermined ratios, through one or more feed <u>inlet nozzles</u> 5a. It is important that the purified protective gas is conducted directly into the oven tube 7 so that any dust released from the insulation would be directed away from the sensitive perform (/or optical fibre) 3. By proper selection of the feed point(s) of the protective gas it becomes possible to influence the direction and the rate of the gas flow within the oven tube and in the various parts of the oven tube. We have found that by proper adjustment of the rate and flow of the gas, the flow at the centre of the oven tube (the hot zone) can be minimized or even close to zero, if so desired. In the simplified flow model, which is to be presented later, the location of the inlet feed is not considered, but it can easily be added therein.

By proper distribution of the gas flows within the furnace it becomes possible to change the gas consumption. Preferably, at least 5 % of the mass flow of the gas is directed downwards, in particular at least 50 %.

The gas flows can be split up in different sub-flows outside the furnace, e.g. using various mass flow regulators.

The outflow of gas from the oven is typically accomplished by allowing a part of the gas to leak through the joints in and between the furnace tubes 7 (or through openings made in the furnace tubes) into the intermediate space. This flow can be enhanced by partially evacuating the intermediate space via <u>outlet</u> nozzle 6a. This procedure is in use in particular during flushing of the intermediate space before heat-processing in order to remove oxygen and moisture from the oven. During the processing the intermediate space is not flushed. The flushing can be made more effective by creating a distinct flow route, e.g. by a nozzle 6b made in the oven tube and by fitting the gas outlet nozzle 6a at a position where there are left no pockets which are difficult to flush. Using a construction of this kind, the rate and the distribution of the gas flow within the oven is not dependent on the operation parameters. At the same time, it becomes easier to find the right rates of the gas flows when the various conductances are clearly defined. If desired, it is possible to provide suction at the outlet, having a flow rate, which can be adjusted to a desired level by using a mass flow regulator and the gas flow route is determined by vias formed in the construction. The purging can be carried out also with a separate feed nozzle, which is directly connected to the interstitial space.

By this arrangement it becomes, on one hand, possible to obtain efficient flushing of the intermediate space and, on the other hand, to transport any particles away from the preform. The gas does not either cool the furnace chamber.

It is of particular importance that, with the exception of the above mentioned vias and nozzles, the furnace is gas-tight, so as not to allow oxygen to penetrate into the furnace chamber. The flow rate of the protective gas fed into the oven with the mass flow regulator, as well as the flow rate of the flushing gas withdrawn from the intermediate space of the oven, adjusted with the mass flow regulator, then the flow distribution for the upper and lower irises are exactly known as well as the barrier flows provided thereby.

A furnace provided with properly working diffusion barriers, the oxygen, which deteriorates the graphite parts of the furnaces primarily stems from the carrier gas. It is therefore important to minimize the volume of gas fed into the furnace and to use clean and pure gas for feed through the furnace chamber.

The processed product comprises preferably an optical fibre or a stretched preform. The processed product is preferably continuously, typically during stretching at various drawing speeds, drawn from the furnace.

As will become apparent from the below description of a preferred embodiment, the upper opening can be formed by a graphite tube or a tube made of quartz. The advantage of the latter is that it is inert, whereas the former can be made as a sacrificial substrate which will react with any oxygen before it enters the furnace. The graphite tube also allows for some dragging contact with the surface of the preform.

The sealing is a barrier zone exhibiting essentially laminar flow conditions of the gas. Therefore it is arranged above the feed nozzles of the protective gas. If the nozzles are fitted at the upper opening, a free flow path upwards of about 10 mm and more is preferred. Lengths of about 15 to 1000 mm are possible. By length is meant a length in the direction of the central axis of the furnace tube. The barrier zone is defined by the clearance between the glass preform and the opening of the furnace. The difference between the external diameter of the glass preform and inner diameter of the opening is typically in the range of 0.5 to 15 mm

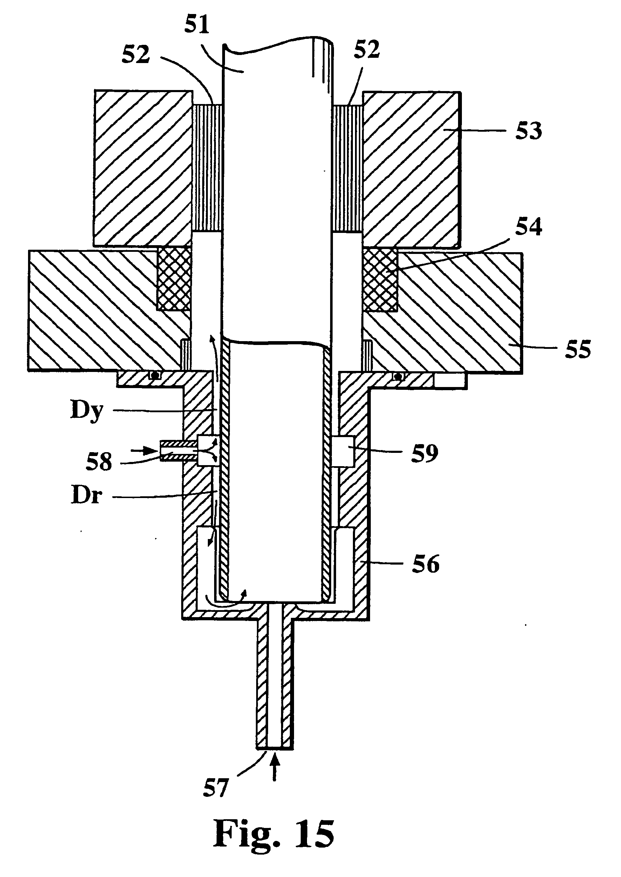

A second example is given in Figure 15, which shows the rotary joint construction for a MCVD/PVD lathe. In the figure, the following reference signs are used:

51. Rotating glass tube
52. Chuck jaws
53. Chuck
54. Bearing (between chuck and the reactor body)
55. Part of reactor body
56. Barrier zone
57. Feed tube of process gas
58. Feed tube for barrier gas
59. Gas distribution ring
Dr diffusion barrier to gases coming from the reaction space
Dy diffusion barrier to ambient gases

In the technical solution according to the example, a glass tube 51 is fed through the jaws 52 which are opened at the bottom of the barrier zone 56. The jaws are close and the tube centered such that a coaxial slit and a gas distribution ring 59 are formed between the tube and the barrier zone. At the end of the barrier zone, gas flow channels have been formed in such a way that the glass tube does not prevent the flow of gas according to the arrows. The gas flowing through Dy is allowed to exit, e.g. passed the jaws. When the tube is arranged for rotation, the only point of contact is at the lubricated bearings 54 of the chuck 53. In the rotary joint between parts 51 and 56 is no contact. Since part 56 is not rotating, the process gas feed nozzle 57 can be equipped with a normal tube fitting. The temperature of the rotary joint thus accomplished is only limited by the limitation normally placed on the constructional parts of the joint. Thus, if part 56 is made of quartz, the operational temperature of the joint can be as high as 1700 °C.

The diffusion barrier is accomplished by feeding gas needed for the forming of the barrier through the feed tube 58. This gas can be a gas, which is inert with regard to the reaction or which is of such a kind that small fluctuations in its concentration do not essentially influence the process. Arriving at the gas distribution ring, which is loose in conductivity compared to the additive conductances of Dy and Dr, the gas is distributed generally along the periphery of the ring.

From this integral periphery the gas is divided into the coaxial slits Dy and Dr depending on their ratio. The conductances of both slits are dimensioned in such a way that there is a barrier formed in them (in accordance with the level of purity selected for them - the level can be, e.g., on the order of ppm's or ppb's). The barrier state comprises a flow which depending on the dimensions of the flow channel allows only for a ppm of the molecular concentration on "downstream" of the barrier to reach the gas distribution ring.

When we examine the operation of the diffusion barrier it should be noted that a tight sealing is formed from two interconnected diffusion barriers, which act in different - preferably opposite - directions. One of the barriers seals the apparatus externally and the other internally. It is possible to assign different requirements for purity for the barriers and, thus, to optimize the gas consumption in respect to the critical direction of flow. By increasing the "safety margin" or by making the feed pressure constant, the barrier can be designed for proper operation using tubes having any diameter within a predetermined range. The smaller the acceptable variation, the smaller are the slits, which are needed and the less gas is consumed for providing the barrier. It is possible, alternatively, to reduce the size of the slit or to increase the flow to increase the feed pressure of the gas through the barriers, whereby the operation of the barrier is no longer pressure dependent. The pressure difference between the outside of the tube and the inside of the tube can also be compensated for by controlling the conductance ratio of the slits. This adjustment can be made by changing the dimensions of the slits (clearance, width and length).

It is further possible to use a connector piece, a metal tube being attached, e.g. to the glass via an elastomeric seal and then this metal tube is fitted inside the part 56, in this case a glass tube. Thereby, a small gas consumption is reached (the clearance between 51 and 56 are small) and a large variance of the tube sizes in the same construction.

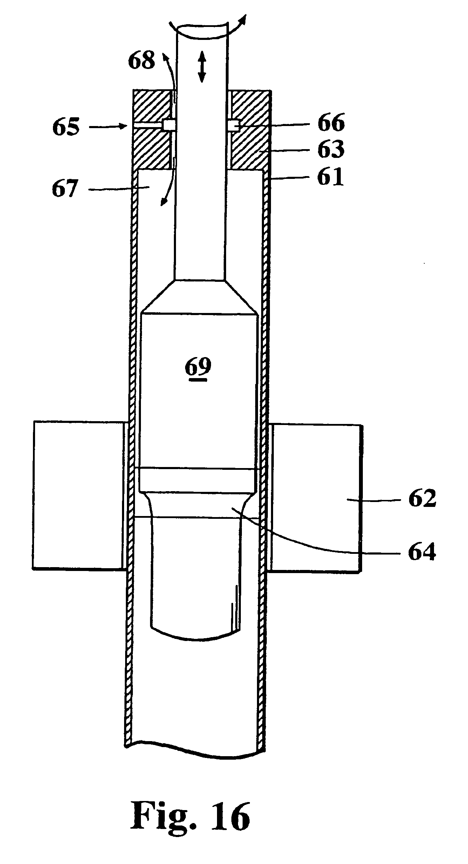

A third example is shown in Figure 16, which depicts a part of a sintering furnace, comprising a furnace tube 61, a furnace 62 for heating, an inlet for process gases 63. The preform 69 is introduced from above into the furnace tube and sintering takes place in the sintering zone 64. A rotary joint being formed at the neck, when the preform is being rotated. The barrier gas fed through nozzle 65 is divided into two flows 67 and 68: one from barrier gas distribution ring 66 towards room atmosphere and second from barrier gas distribution ring towards process gas volume. Both flows are adjusted to form protective barrier flow to prevent air reaching the barrier gas distribution ring and on the other hand prevent process gases reaching the distribution ring 66. This type of construction can be constructed many different ways and it works as well by using suction instead of feeding gas to the barrier gas distribution ring. One aim is to achieve a situation where there are two opposite flow, which have adjusted to form protective diffusion barrier like described in the present invention in further detail below.

Dimensioning of the construction according to the present invention

Diffusion barrier

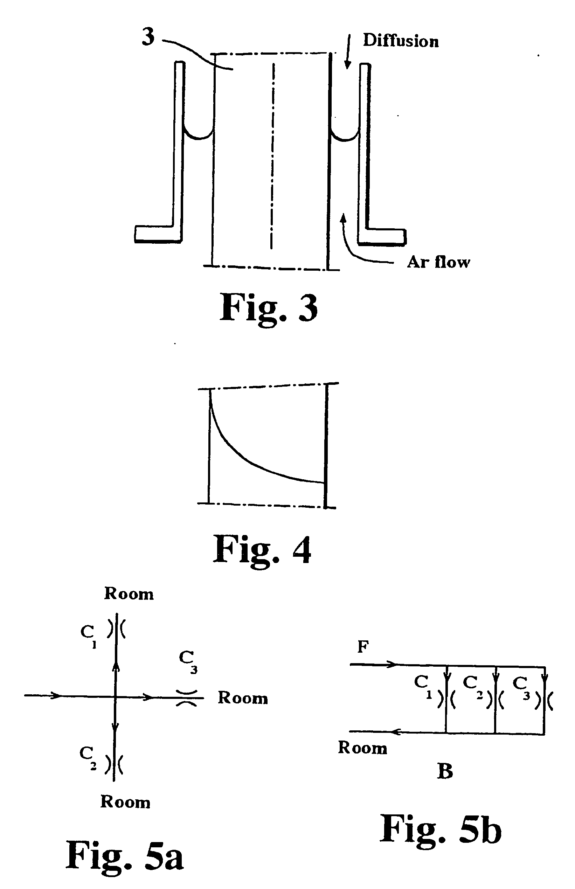

In Figure 3, the flowing pattern in the iris is disclosed. A similar barrier flow can be used in other external and internal inlets and outlets according to the invention. The present invention aims at preventing the flow of undesired gas molecules via the inlet (e.g. into the oven). The prerequisite of the dimensioning is that an inflow having a tolerable level of impurities is allowed. Complete purity is not an aim. Such an acceptable level is the concentration of impurities in the inert protective gas (used for producing a barrier flow) or a fraction (e.g. a tenth part) thereof. On the other hand, the effectiveness of the barrier is also influenced by the barrier distance available. The barrier flow can be calculated from the cross-section of the opening and the volume flow of the barrier flow.

The diffusion barrier conditions can be calculated as follows:

Equations for gas iris design

1) Stationary medium:

Fick's diffusion law in one dimension for concentration C(x,t):

$$\frac{\partial C(x,t)}{\partial t} = D \frac{\partial^2 C(x,t)}{\partial x^2}$$

States that the time derivative of concentration equals the second spatial derivative of the concentration multiplied by a constant D. Constant D is defined as the material diffusion constant, $[D]=[m^2/s]$.

Consider a boundary at x=0, with negative x-values at left hand side and positive values at right. Assuming constant concentration $C_s$ at left hand side, and initially (*t=0*) zero concentration at right side, the solution of Fick's diffusion equation would be

$$C(x,t) = C_s, x < 0$$

$$C(x,t) = C_s\left[1 - erf\left(\frac{x}{2\sqrt{Dt}}\right)\right], x \geq 0$$

This means that when the time of observation $t$ goes to infinity (erf(0)=0), concentration reaches $C_s$ thoughout the space.

2) Moving medium:

In a gas iris the diffusion flow is suppressed by an opposing flow of the medium. Continuing with the above example the medium would flow from right to left in order to counterbalance the diffusion flow.

Fick's law for a moving medium has an additional term in the right side of the equation,

$$\frac{\partial C(x,t)}{\partial t} = D\frac{\partial^2 C(x,t)}{\partial x^2} + v\frac{\partial C(x,t)}{\partial x}$$

where v is (the magnitude of) the velocity of the medium flowing from right to left. The effect of the additional term is to reduce the concentration the more the velocity v is. Note that the concentration decreases to the right, and the sign of the spatial derivative of C(x,t) is negative.

Trial function of the form

$$C(x,t) = C_s\left[1 - erf\left(\frac{x + vt}{2\sqrt{Dt}}\right)\right]$$

Satisfies the Fick's equation for moving medium.

Another, time independent trial function of the form

$$\bar{C}(x,t) = C_s \cdot e^{-\left(\frac{v}{D}\right)x}$$

satisfies Fick's equation also.

For curiosity, yet another solution exists, namely

$$C(x,t) = C_s \cdot e^{+\left(\frac{v}{D}\right)(x + 2vt)}$$

However, this one goes to infinity as time t evolves, so that the solution is excluded as unphysical.

The general trial function is found by superposing the trial functions above,

$$C(x,t) = C_1(t)\left[1 - erf\left(\frac{x + vt}{2\sqrt{Dt}}\right)\right] + C_2(t) \cdot e^{-\left(\frac{v}{D}\right)x}$$

where

$$C_1(t) + C_2(t) = C_s$$

The time dependence of the solution depends on the error function argument

$$Arg = \frac{x + vt}{2\sqrt{Dt}}$$

Time derivative of the argument is

$$\frac{\partial Arg}{\partial t} = \frac{\partial}{\partial t}\left(\frac{x + vt}{2\sqrt{Dt}}\right) = -\frac{x}{4t\sqrt{Dt}} + \frac{v}{4\sqrt{Dt}}$$

which goes zero when time t satisfies the condition

$$v = \frac{x}{t}$$

Thus, if the velocity $v$ is constant, there will always be a moment in time $t=t_0$, that at any point $x$ the error function argument has a maximum value. When time goes on, the argument will decrease until it finally goes zero with infinite t.
Thus, for infinite t, the solution is reduced to the time independent term

$$C(x, t = \infty) = C_s e^{-\frac{v}{D}x}$$

Considering a gas iris of length L, the stationary condition states that the concentration behind the gas iris will be

$$C(L, t = \infty) = C_s e^{-\frac{v}{D}L}$$

So that the sealing efficiency of the iris E is

$$E = \frac{C_s}{C(L, t = \infty)} = e^{+\frac{v}{D}L}$$

From the above it is seen that the sealing efficiency rises exponentially with increasing medium velocity $v$ or iris length $L$.
The iris length L is obtained from the exponential equation above:

$$L = \frac{D}{v}\ln\left(\frac{C_s}{C(L, t = \infty)}\right)$$

**(equation 1)**

6.2.2 Distribution of the protective gas flow

In Figure 5a, the distribution of the gas flow (F) in the conductances of the upper iris (C1), the lower iris (C2) and the purge flow of the intermittent space (C3) is shown. When the gases flow into the same room, the same feature can be shown as the flow system according to Figure 5b. In a system of this kind, the flow is distributed directly in the ratio of the conductances, which means that, for example, the flow of the upper iris (F1) is:

$$F1 = F*C1/(C1+C2+C3). \tag{2}$$

The other flows can be calculated in a similar fashion.

The conductances can, for their part, be calculated from the following equation:

$$C = K\ W*H^3/L\ , \text{ wherein} \tag{3}$$

C    stands for conductance
K    is a coefficient
W    is the width of the slit
H    is the clearance of the slit
L    is the length of the slit in flow direction.

By considering the geometrical dimensions of the inlets and outlets, the flow velocity in each inlet can readily be calculated and inserted into the equation (1) derived in paragraph 6.2.1. By comparing the barrier length of a physical specimen with the barrier length given by the equation it is easy to determine whether the barrier flow is sufficient or whether it should be altered.

From equation (1) it can also be seen that by increasing the length of the barrier slit, the barrier flow needed can be reduced even if it becomes apparent from equation (3) that the conductance increases. By reducing the clearance of the slit, the flow rate can be increased whereby also a lower flow rate of the barrier gas is needed. This influences conductance to the third potential, equation (3).

When we examine the equation of the gas flow distribution (2) we note that the calcuation has be made by iteration because a change in the dimensions of the nozzle (e.g. the iris) Will also have an impact on its conductances and thereby on the distribution of the flow over the various conductances. This, on the other hand, changes the flow velocity of the gas fed through the slit and therefore also has a bearing on the required length of the barrier path. One easy way of performing the iterative calculation comprises the use of table calculation.

Chimney effect

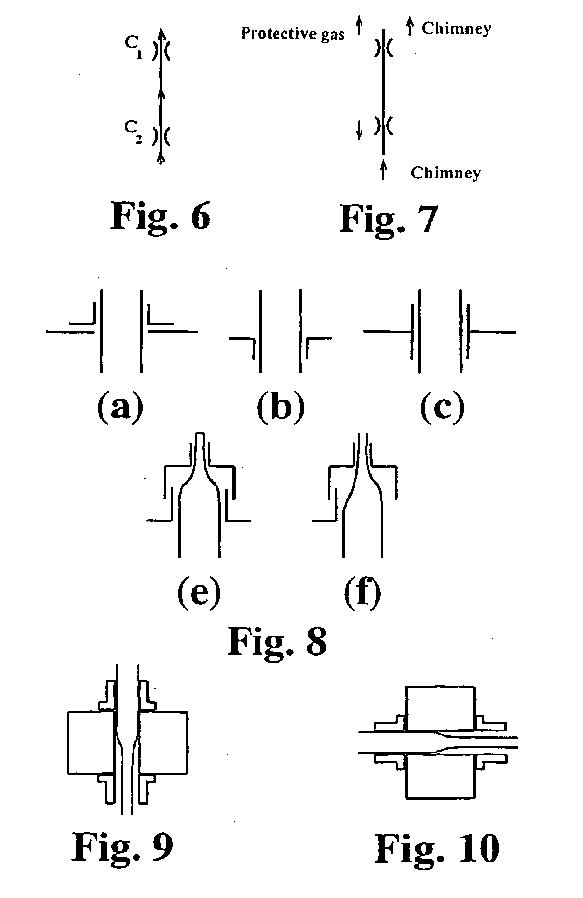

When the furnace is placed in vertical position and when it is warm, a chimney effect based on buoyancy will be generated in the furnace tube. This effect can be calculated as explained in the following (reference is also made to Figure 10):

A tube of height $h$ is kept at temperature $T_2$. The surrounding air is at temperature $T_1$. Air pressure at the tube exit level (reference level) is $p_0$. The pressure at depth $h$ below the reference level depends linearly on depth h and gas density $\rho$ such that outside the tube at depth h,

$$p_{out} = p_0 + \rho_1 \cdot g \cdot h$$

Where g = 9.81 m/s$^2$ is the gravitational acceleration constant. Inside the tube at level h,

$$p_{in} = p_0 + \rho_2 \cdot g \cdot h$$

The pressure difference at level $h$, $\Delta p_h$, is thus

$$\Delta p_h = g \cdot h \cdot \left( \rho_1 - \rho_2 \right)$$

Density $\rho$, temperature $T$, and pressure $p$ are related together for ideal gases by

$$p = \frac{n_{mol}}{V} \cdot R \cdot T = \frac{n_{kpl}}{V} \cdot k \cdot T = \frac{\rho}{M} \cdot k \cdot T = \frac{\rho}{M_{mol}} \cdot R \cdot T$$

For argon gas (Ar), molar weight is $M_{mol}$ (Ar)= 40 g/mol and for nitrogen gas, $M_{mol}(N_2)$=28 g/mol. For air,
[0095] $M_{mol}$(air)=29 g/mol. M is the gas molecular weight.
R is the molar gas constant, R = 8.314510 J-mol$^{-1}$-K$^{-1}$ (= 0.08314510 bar dm$^3$ mol$^{-1}$-K$^{-1}$).
k is the Boltzmann constant, k=1.380658·10$^{-23}$ J/K. R and k are related together by the

$$k = \frac{R}{N_a}$$

Avogadro constant $N_a$, such that
$N_a$ = 6.0221367·10$^{23}$/mol.
Ideal gas density [kg/m$^3$] is thus

$$\rho = \frac{p \cdot M_{mol}}{R \cdot T} = \frac{p \cdot M}{k \cdot T}$$

If the gas is heated from temperature $T_1$ to temperature $T_2$ while keeping the pressure $p$ constant, its density is reduced accordingly,

$$\left. \frac{\rho(T_2)}{\rho(T_1)} \right|_p = \frac{\dfrac{p \cdot M_{mol}}{R \cdot T_2}}{\dfrac{p \cdot M_{mol}}{R \cdot T_1}} = \frac{T_1}{T_2}$$

$$\Leftrightarrow$$

$$\Delta\rho = \rho(T_2) - \rho(T_1) = \left( \frac{T_1}{T_2} - 1 \right) \cdot \rho(T_1)$$

The overall pressure difference induced by a heating-cooling cycle at the bottom level of the chimney is obtained by substituting density difference equation to the pressure difference equation above,

$$\Delta p = g \cdot h \cdot \left( \rho(T_2) - \rho(T_1) \right) = g \cdot h \cdot \left( \frac{T_2}{T_1} - 1 \right) \cdot \rho(T_1)$$

## (Equation 4)

The pressure difference can be calculated by inserting the temperature of the furnace and the dimensions thereof into equation 4.
It should be noted from equation 4 that if a gas having a density higher than air is used, then the direction of flow of the protective gas is directed downward. As a result, the gas has to be heated to a temperature higher than about 400 K, at which temperature the chimney flow will turn upwards. This, at the same time means that, at the temperatures mentioned, the mass flow of protective gas needed for reverting the chimney flow is reduced.

When the matter is studied based on the depiction in Figure 6, it can be noted that the pressure difference strives at providing a flow through the conductance of the upper iris (C1 and the conductance of the lower iris (C2). In this example, the conductance of the furnace tube has not been considered because it has been estimated to be of such a magnitude that it bears no influence on the formation of diffusion barriers in the openings. It would, however, be rather straightforward to consider it. The chimney flow can be calculated by using the following equation

$$1/Ctot = 1/C1 + 1/C2 \qquad (5)$$

for the cumulative effect of serial conductances and

$$Fh = Ctot(P1^2 - Po^2) \qquad (6)$$

for the chimney flow, wherein

Ctot is the toal conductance and
Fh is the chimney flow
Po is the air pressure
P1 on the sum of the air pressure and the chimney effect

Since the chimney effect is directed upwards, the chimney flow has to be added to the flow directed through the upper iris. Correspondingly, it has to be reduced from the flow directed through the lower iris, because is weakens that flow. These features are illustrated in Figure 7.

The rate of the chimney flow is usually significant compared to the barrier flows, which means that it is possible easily to obtain a situation where there is formed a diffusion barrier at the upper iris. The problem to be solved is therefore rather how to create a situation in which the flow rates are sufficiently large to generate a diffusion barrier also at the lower iris.

It can be assumed, when looking at the situation more generally, that the required volume flow of protective gas is such that it is sufficient to cover the chimney flow through the upper iris. In addition to that volume, further flow of protective gas should be sufficient also to form a diffusion barrier- when the flow is divided according to equation 2 - also at the lower iris (the flow through the upper iris increses also as shown by equation 2. In such a case, it is preferred to construct the lower iris with a larger clearance between the preform (or optical fibre) and inside of the opening to allow for a greater flow of protective gas to direct the major part, preferably at least 60 volume-%, in particular at least 70 volume-%, of the additional flow downwards. Similarly, it can be deducted from equation 1 that a reduction of the barrier length and the flow slit (increase of flow rate) will reduce the amount of necessary barrier flow. The limit will be reached when the conductance at the lower iris becomes too small (i.e. when a greater part of the flow is directed to the upper iris). Also the slit between the preform and the furnace tube 7 is a conductance, whereby it has to be considered when dimensioning flow rates and volumes. By transferring the feed point from the upper opening towards the lower opening, the ratio between the conductances directed upwards and downwards, respectively, whereby the feed rate for annulling the chimney flow is reduced. The gas consumption is then decreased.

In practice, it can be said that the conductance of the lower iris should be greater than that of the upper iris. On the other hand, the flow needed for creating a diffusion barrier is rather small (only a few SLM compared to the chimney flow when a barrier length of some 1 to 5 cm is arranged at the lower iris. Then, the clearance at the lower iris can be considerable, which facilitates operation of the equipment. This arrangement becomes particularly advantageous when drawing is made upwards, because it becomes possible to leave ample space for a preform, which is of imperfect shape and, e.g., having bowing and bumps on the surface, whereas the drawn or stretched elongated product, which has a much more exactly defined shape, will pass through the furnace opening at the upper iris, where the clearance should be smaller to allow for a proper diffusion barrier.

As a good rule of thumb, a flow rate comprising the chimney flow + 5 SLM can be mentioned. If necessary, the feed can be increase somewhat to allow for a volume sufficient for flushing of the intermediate space. When a lower opening having an inner diameter of 80 mm and a lenght of 100 mm, a flow on the above order is sufficient. This flow volume has to be added to the chimney flow which, depending on the density of the gas, the temperature, the total conductance and the length of the furnace, is on the order of about 5 - 100 SLM.

The difference between the external diameter of the preform and the inner diameter of the upper opening is preferably about 1 - 15 mm, and the length of the zone formed above the feed nozzles for the protective gas - providing a zone of laminar gas flow - is about 10 mm to 1000 mm, preferably about 15 - 150 mm.

In the above-described situation the upper iris works as a throttle and the flow through it is so large that it is easy to meet the diffusion barrier condition. Similarly, in the lower iris end of the furnace, primarily care has to be taken to see that the diffusion barrier condition is met.

The chimney flow can easily be added to the distribution equations of the inert gas for instance by table calculation. It is good to note that changes in the dimensions of the irises also influence the magnitude of the chimney flow. Therefore, a change of one part, influences the whole flow system. It is difficult to see these contrary effects, they always have to be calculated when any changes are to be implemented in the system.

Finally, in horizontally placed furnaces, the chimney effect need not be considered. In vertical furnaces it is of significance already at a temperature of 500 °C.

The apparatus according to the invention has been used for the stretching of preforms in the following manner:

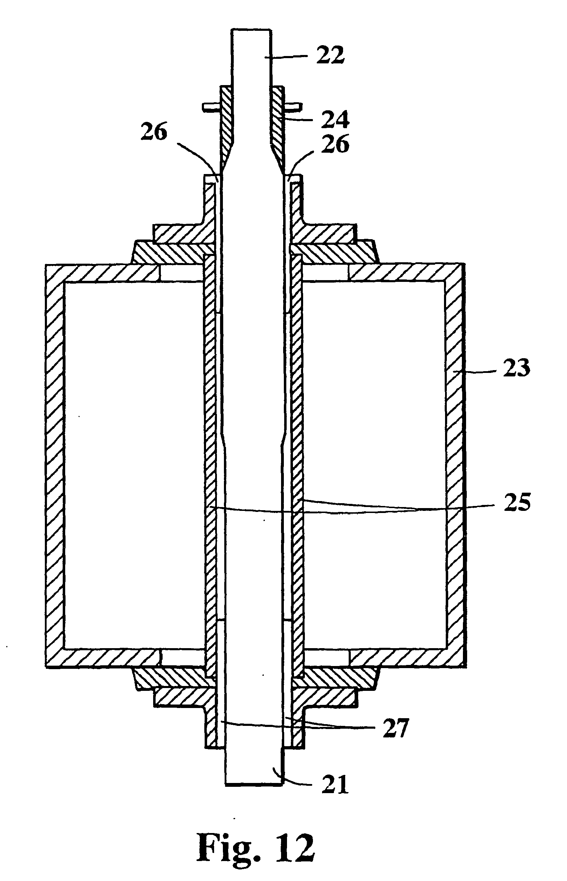

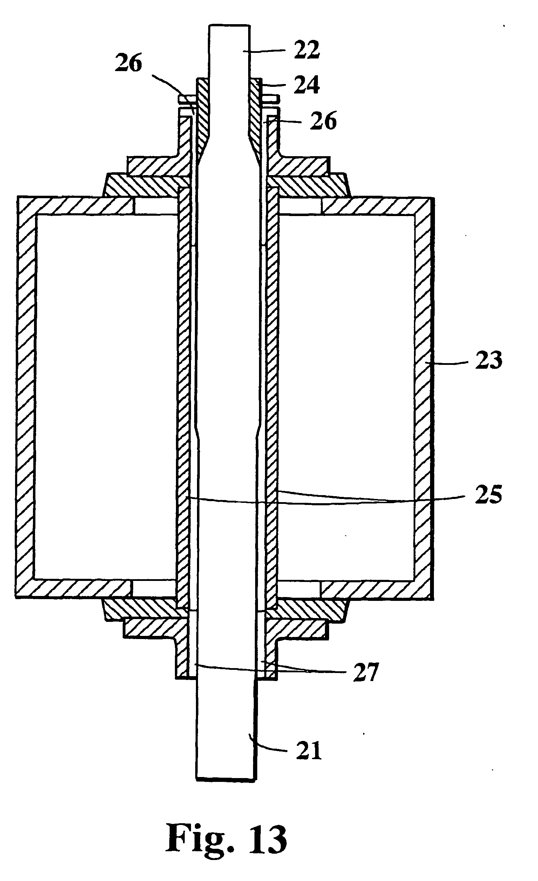

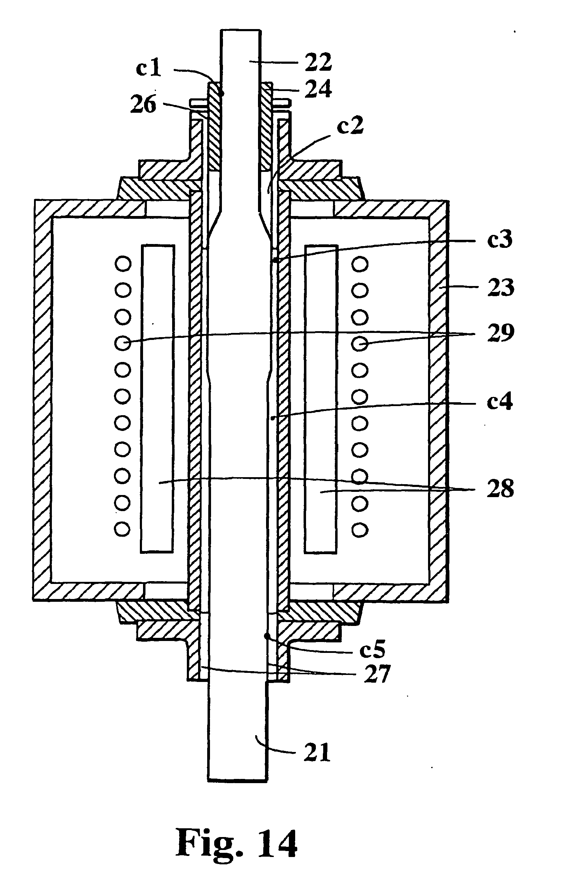

Figure 12 shows the intermediate stage of the process, Figure 13 shows a phase in which the handler 22 of the preform 21 moves inside the furnace 23, and Figure 14 shows the end phase of the process in which sealing occurs between the handler 22 and the collar 24.

The following reference numerals are used: Preform 21, handler 22, furnace wall 23, collar 24, graphite tube 25, upper diffusion barrier zone 26, lower diffusion barrier zone 27 (in Figure 14: porous graphite block 28, heating coil 29).

The apparatus has been designed in such a way that a seal is formed by the slit between the preform and the inner wall of the inlet opening. Since the preform does not contact with the furnace, it can be rotated, if so desired.

Towards the end of the process, the handler is moving into the sealing zone, at which stage the seal is formed by the slit between the perimeter of the preform and the inside surface of the inlet opening as well as the slit between the collar and the inside surface of the inlet opening. The diameter of the inlet opening and the perimeter of the collar are dimensioned in such a way that the sealing length of at the upper part of the furnace and the throttling effect do not significantly change at this stage. Rotation of the preform is still possible.

At the end of the process, the collar seals against the inlet opening and the sealing opening is formed by the slit between the collar and the handler. Preferably, this slot is shaped in such a way that the throttling effect of the inlet opening remains constant during the various stages of the process. Rotation of the preform is still possible. If the collar and the inlet opening are not necessarily sealed against each other by using sealing materials, it is possible to leave a slit between them, which provides for a sealing flow. Then, the throttling effect of the upper sealing zone is defined by two parallel conductances, viz. the slits between the collar and the handler and between the collar and the inlet opening. In the case examined herein, the chimney effect is much stronger and, at the same time, due care has to be taken that the sealing flow providing a diffusion barrier is strong enough at both ends of the furnace.

When we examine the drawing according to Figure 14, we note that the furnace can be considered to be formed by 5 successive conductances ($c_1$, $c_2$, $c_3$, $c_4$ and $c_5$), the total effect of which will throttle the chimney flow (for calculating the total effect, formula 5 can be used). Thus, for example in cases in which the slit between the furnace tube and the preform is very narrow, the dominating conductance of the system is formed at this place (the other conductances are smaller, even when taken together, than this conductance), which is the most dominating conductance of the whole arrangement. When this is the case, any variations of the slit of the inlet opening will not influence the magnitude of the furnace flow as dramatically as could be expected by only examining the conductance of the inlet opening. Preferably, the inner diameter of the inlet opening/tube and the inner diameter of the furnace tube should be essentially the same, which allows for minimization of the furnace effect of each inlet opening. In practice, when there is a variation of the sizes of the preforms, this is not always attainable outside standard production.

Based on the above, it is easy to understand that by selecting the inlet/feed point of the gas it is possible to influence the amount of gas needed. According to Figure 7, the gas is divided into an upward-directed flow and a downward-directed flow, the respective amounts of which are determined by the ratio between the total conductances of the routes. The upward-directed flow is restricted by the accumulated conductance of the conductances above the feeding point and the downward-directed flow is restricted by the accumulating conductance of the conductances below the feeding point, respectively. The total conductances can be calculated from formula 5. With these total conductances, it is possible to replace the conductances denoted "$c_1$" and "$c_2$" in equation 2 (in the case of two outlet, $c_3$ can be omitted), whereby the flows directed upwards and downwards, respectively, can be calculated. When the position of the feed point is changed from above the dominating restriction to below it, $c_1$ is reduced and $c_2$ is increased. In other words, the part of the flow directed downwards is increased and the amount going upwards is reduced. Thus, by using a smaller flow rate is it possible to obtain a downward-directed flow, which will counteract the downward-directed flow. This feature becomes particularly important when the process is implemented in such a way that the preform is fed from below the furnace and the processed product is withdrawn from the furnace through the upper opening.

In the solution according to the invention, a loose lower opening was employed.

EXAMPLE

In the example, the flow has calculated having the following dimensions:

| | |
|---|---|
| Preform diameter | 80 mm |
| Preform length | 1000 mm |
| Stretched preform diameter | 42.5 mm |
| Handler diameter | 45 mm |
| Diameter of upper opening | 83 mm |
| Length of upper opening | 100 mm |
| Diameter of lower opening | 83 mm |
| Length of lower opening | 150 mm |
| Collar inside diameter | 53 mm |
| Collar inside length | 80 mm |
| Collar outside diameter | 80 mm |
| Collar outside length | 50 mm |
| Furnace tube inside diameter | 93 mm |
| Furnace tube length | 400 mm |

Used run parameters:

| | |
|---|---|
| Inert gas | argon (Ar) |
| Temperature | 1950 °C |

The flow values were calculated at safe size by using formulas 1-6

The easiest way is to calculate the chimney effect through the furnace first and then calculate the gas distribution for the used feeding points. The needed diffusion barrier flow for lower iris flow was added to that flow. The sum flow was then used as inert gas flow value.

By using calculated values:

| | |
|---|---|
| Gas feed under upper opening | 30 SLM |
| Gas feed 150 mm under centerline | 15 SLM |

Generally, feeding a significant part, e.g. about 5 -100 %, in particular 50 -100 % (calculated from the fed mass flow), of the gas at or below the centerline of the furnace tube (the point where the temperature is highest in the furnace) has been advantageous in the method and the apparatus according to the invention.

The construction worked well and no oxygen damages were noticed.

When the conductances are calculated, it is important to consider what kind of gas actually is employed (e.g. its density) and to apply coefficients for correcting the temperature effects in the equations mentioned above.

Within the scope of the present invention, alternative embodiments are also possible. Thus, as shown in Figure 8, it is possible to fit the barrier tube up or inside the furnace or the furnace tube can work as a barrier tube. A combination of these alternatives is also possible. It is further possible to adapt the apparatus to thickness variations by using a plurality of barrier tubes, which are fitted inside each other. The gas feed can take place from an upper inlet, a lower inlet or through a nozzle in the middle of the furnace, or as a combined feed into two or three of these feed points. As discussed above, it is possible to arrange a barrier space inside the furnace to allow for regulation of the flow rates and volumes as a function of the thickness of the preform and the thickness variations thereof.

Although the above description describes tensional processing, the same principles can be applied to compression processing of glass preforms. Also processing in which no tension is used, are covered by the present invention.

The protective flows can be achieved by feeding the gas or by using suction and these flows can be arranged to be opposite to separate two volumes from each other. There can be several barrier flows at the flow system. The method is applicable to processing of tubes, rods and empty tubes.

A particularly interesting embodiment comprises the use of a rotary joint accomplished by the present diffusion barrier principle in MCVD lathes. By this sealing method, many of the problems related to leaks and wear of present-day rotary joints can be mitigated or even eliminated. In particular, the present invention provides a technical advantageous solution for non-contact sealing when hot and/or aggressive gases are fed into the lathe during the deposition/growth stage of the process.

**Claims**

1. A method of subjecting a glass preform (3, 21) to processing by tensile forces in a furnace to produce a glass product of predetermined shape, according to which method

   - at least a part of the glass preform (3, 21) is introduced into the furnace (7, 23) through an inlet opening (1, 26),
   - a portion of the glass preform (3, 21) introduced into the furnace is heated to a temperature above the softening point of the glass,
   - the heated portion of the glass preform (3, 21) is subjected to tensile forces in a drawing direction to process the preform into the predetermined shape,
   - the portion of the preform (3, 21) which has been processed into the predetermined shape is drawn from the furnace through an outlet opening (2, 27), and
   - the heated portion of the preform (3, 21) and at least a part of the processed portion of the preform are flushed in the furnace (7, 23) with inert gas which is being fed into the furnace,
   - the concentration of gaseous impurities in the furnace is maintained essentially on the same level as the concentration of the same impurities in the inert gas fed into the furnace (7, 23),
   - a diffusion barrier against the inflow of undesired gaseous components from the ambient air, driven by the forces of diffusion, is established by generating a barrier flow of inert gas in at least one opening selected from said inlet opening and said outlet opening (2, 27) of the furnace, said barrier flow having a direction of flow, which is generally opposite to the direction of the diffusion,

   **characterized by**

   - generating an essentially laminar barrier flow.

2. The method according to claim 1, wherein the furnace (7, 23) comprises an elongated furnace chamber having a vertical central axis, said diffusion barrier being established in the inlet opening (1, 26), which is located in the upper end of the elongated furnace chamber.

3. The method according to claim 1 or 2, wherein a diffusion barrier is established in the inlet opening (1, 26) of the glass preform, in the inlet opening of the inert gas feed and in the outlet opening (2, 27) of the processed preform.

4. The method according to claim 2, wherein there is gas flow through the inlet opening (1, 26) of the glass preform, which flow corresponds to the equation (2)

$$F1 = F*C1/(C1+C2), \qquad\qquad (2)$$

wherein

   F1 stands for the gas flow through the inlet opening (1, 26),
   F stands for the total gas flow,
   C1 stands for the conductance of the inlet opening (1, 26) and
   C2 stands for the conductance of the outlet opening (2, 27)

5. The method according to claim 4, wherein the openings (1, 2, 26, 27) comprise slits between the preform and inner walls of the openings and each of the conductances C1 and C2 of the slits are calculated from the equation (3)

$$C = K\, W*H^3/L, \qquad\qquad (3)$$

wherein

C stands for conductance,
K is a constant at low pressure differences,
W is the width of the slit,
H is the clearance of the slit, and
L is the length of the slit in the flow direction.

6. The method according to any of claims 1 to 5, wherein there is a flow of inert gas through the outlet opening (2, 27), which flow is at least equal to the flow of gas caused by the chimney effect through the inlet opening (1, 26).

7. The method according to claim 6, wherein the flow of inert gas into the furnace is sufficient still to form, based on the gas distribution according to equation (2), a diffusion barrier at the outlet opening (2, 27) of the processed preform.

8. The method according to claim 7, wherein the outlet opening (2, 27) will allow for more free flow of gas than the inlet opening (1, 26) to direct most of the inert gas flow fed into the furnace (7, 23) through the outlet opening.

9. The method according to any of claims 3 to 8, wherein the conductance of the outlet opening (2, 27) is greater than the conductance of the inlet opening (1, 26).

10. The method according to any of the preceding claims, wherein the inert gas fed into the furnace (7, 23) is equal to or greater than the flow of gas caused by the chimney effect + 1 SLM (standard litre per minute), in particular chimney effect + 5 SLM (standard litre per minute).

11. The method according to any of the preceding claims, wherein the glass preform (3, 21) is subjected to tensile drawing in order to stretch the preform into a shape suitable for post-processing like drawing of optical fibres.

12. The method according to any of claims 1 to 10, wherein the glass preform (3, 21) is subjected to drawing of optical fibre.

13. The method according to claim 12, wherein the clearance between the exterior diameter of the glass preform (3, 21) and the inlet opening (1, 26) diameter is 0.1 - 10 mm for an 80 mm preform.

14. The method according to claim 12, wherein the barrier zone has a length parallel to the drawing direction amounting to 10 - 1000 mm, preferably 15 - 150 mm.

15. The method according to any of claims 1 to 14, wherein the furnace (7, 23) comprises a graphite induction furnace.

16. The method according to any of the preceding claims, comprising rotating the glass preform (3, 21) about its central axis during heat-processing in the furnace (7, 23).

17. An apparatus for heating of glass performs (3, 21) which are processed by tensile forces into a glass product of predetermined shape, comprising

- a furnace body (7, 23) having a jacket defining an elongated furnace chamber with an at least essentially circular cross-section perpendicular to the central axis of the chamber,
- a first opening (1, 26) at one end of the chamber for receiving one end of a glass preform, which is to be processed,
- a second opening (2, 27) at an opposite end of the chamber for withdrawal of the processed glass product,
- heating means (28) mounted to the furnace chamber to provide for heating of the glass preform in the furnace, and
- feed nozzles (5a, 5b, 5c) connected to at least the first opening (1, 26) of the chamber for introducing protective gas flow into the furnace chamber,

wherein

- the first opening (1, 26) is dimensioned so that a first diffusion barrier zone is formed at the first opening (1, 26) at said protective gas flow for preventing inflow of undesired gaseous components from the ambient air, driven by the forces of diffusion, into the furnace chamber during heating of the glass preform,

**charcterized** in that

- the first opening (1, 26) is dimensioned so that the barrier zone comprises a zone of essentially laminar gas flow.

18. The apparatus according to claim 17, wherein there is a second diffusion barrier zone at the second opening (2, 27) of the furnace chamber.

19. The apparatus according to claim 17 or 18, wherein a nozzle (5a) for feed of protective gas is connected to both the first (1, 26) and the second openings (2, 27) and, optionally, also to an opening formed in the jacket of the furnace chamber at a point between the first and the second openings.

20. The apparatus according to any of claims 17 to 19, wherein the apparatus is adapted for heating of a glass preform (3, 21) subjected to drawing of optical fibre.

21. The apparatus according to claim 20, wherein the clearing between the exterior diameter of the glass preform (3, 21) and the first opening (1 ,26) diameter is 0.1 - 10 mm for an 80 mm preform.

22. The apparatus according to claim 21, wherein the barrier zone has a length parallel to the central axis of the chamber amounting to 10 - 1000 mm, preferably 15 - 150 mm..

23. The apparatus according to any of claims 17 - 22, wherein the barrier zone is formed above the feed nozzles (5a, 5b, 5c) of the protective gas.

24. The apparatus according to any of claims 17 to 23, wherein the barrier zone is defined by the clearance between a glass preform and the opening of the furnace.

25. The apparatus according to claim 24, wherein the difference between the external diameter of the glass preform (3, 21) and inner diameter of the opening is in the range of 0.5 to 15 mm.

26. The apparatus according to any of claims 17 to 25, wherein the barrier zone has a length parallel to the central axis of the furnace amounting to about 10 to 1000 mm, preferably about 15 to 150 mm.

27. A process for heat-treatment of glass substrates (3, 21), in which process the glass substrate (3, 21) is placed in a first gas space of a heat treatment zone, surrounded by a second, ambient gas space, said heat treatment zone being provided with at least one gas conduit (1, 2, 26 ,27) interconnecting the first and the second gas spaces, **characteriz ed** by forming a diffusion barrier exhibiting essentially laminar gas flow preventing inflow of undesired gaseous components from the ambient gas, driven by the forces of diffusion, into the heat treatment zone in the at least one gas conduit (1, 2, 26 ,27) interconnecting the gas space inside the heat treatment device with the ambient gas space to seal off the conduit (1, 2, 26 ,27) against flow of gas in at least one direction through the conduit (1, 2, 26 ,27).

28. The process according to claim 27, comprising establishing a diffusion barrier against the inflow or outflow of undesired gaseous components from or to the ambient gas space, driven by the forces of diffusion, by generating a barrier flow of inert gas in at least one said gas conduit, said barrier flow having a direction of flow, which is generally opposite to the direction of the diffusion.

29. The process according to claim 27 or 28, comprising establishing a diffusion barrier in each of the gas conduits (1, 2, 26 ,27) interconnecting the first and the second gas spaces.

30. The process according to any of claims 27 to 29, wherein the heat treatment comprises preform processing by Modified Chemical Vapour Deposition in an MCVD lathe.

31. The process according to any of claims 27 to 29, wherein the heat treatment comprises preform processing in a sintering furnace.

32. The process according to any of claims 27 to 31, wherein the diffusion barrier is established at a gas conduit comprising a rotary joint.

33. The process according to claim 32, wherein the rotary joint is a non-contacting joint.

**Patentansprüche**

1. Verfahren zum Bearbeiten einer Glasvorform (3, 21) durch Zugkräfte in einem Ofen, um ein Glasprodukt mit vorbestimmter Formgestalt herzustellen, wobei gemäß dem Verfahren

 - mindestens ein Teil der Glasvorform (3, 21) durch eine Einlassöffnung (1, 26) in den Ofen (7, 23) eingeführt wird,
 - ein Abschnitt der in den Ofen eingeführten Glasvorform (3, 21) auf eine Temperatur über dem Erweichungspunkt des Glases erwärmt wird,
 - der erwärmte Abschnitt der Glasvorform (3, 21) Zugkräften in einer Ziehrichtung ausgesetzt wird, um die Vorform in die vorbestimmte Formgestalt zu bearbeiten,
 - der Abschnitt der Vorform (3, 21), der in die vorbestimmte Formgestalt bearbeitet wurde, durch eine Auslassöffnung (2, 27) aus dem Ofen gezogen wird und
 - der erwärmte Abschnitt der Vorform (3, 21) und mindestens ein Teil des bearbeiteten Abschnitts der Vorform im Ofen (7, 23) mit Inertgas gespült werden, das in den Ofen geführt wird,
 - die Konzentration gasförmiger Verunreinigungen im Ofen im Wesentlichen auf dem gleichen Wert wie die Konzentration der gleichen Verunreinigungen im Inertgas gehalten wird, das in den Ofen (7, 23) geführt wird,
 - eine Diffusionssperre gegen den Zustrom unerwünschter gasförmiger Komponenten aus der Umgebungsluft, getrieben durch die Diffusionskräfte, gebildet wird, indem eine Sperrströmung von Inertgas in mindestens einer Öffnung erzeugt wird, die aus der Einlassöffnung und der Auslassöffnung (2, 27) des Ofens ausgewählt ist, wobei die Sperrströmung eine Strömungsrichtung hat, die allgemein entgegengesetzt zur Richtung der Diffusion ist,

 **gekennzeichnet durch**

 - Erzeugen einer im Wesentlichen laminaren Sperrströmung.

2. Verfahren nach Anspruch 1, wobei der Ofen (7, 23) eine längliche Ofenkammer mit einer senkrechten Mittelachse aufweist, wobei die Diffusionssperre in der Einlassöffnung (1, 26) gebildet wird, die im oberen Ende der länglichen Ofenkammer liegt.

3. Verfahren nach Anspruch 1 oder 2, wobei eine Diffusionssperre in der Einlassöffnung (1, 26) der Glasvorform, in der Einlassöffnung der Inertgaszufuhr und in der Auslassöffnung (2, 27) der bearbeiteten Vorform gebildet wird.

4. Verfahren nach Anspruch 2, wobei Gasströmung durch die Einlassöffnung (1, 26) der Glasvorform vorhanden ist, wobei die Strömung Gleichung (2)

$$F1 = F*C1/(C1 + C2) \hspace{3cm} (2)$$

 entspricht,
 wobei

 F1 die Gasströmung durch die Einlassöffnung (1, 26) bezeichnet,
 F die Gesamtgasströmung bezeichnet,
 C1 die Konduktanz der Einlassöffnung (1, 26) bezeichnet und
 C2 die Konduktanz der Auslassöffnung (2, 27) bezeichnet.

5. Verfahren nach Anspruch 4, wobei die Öffnungen (1, 2, 26, 27) Schlitze zwischen der Vorform und Innenwänden der Öffnungen aufweisen und jede der Konduktanzen C1 und C2 der Schlitze anhand von Gleichung (3) berechnet wird:

$$C = K \ W*H^3/L \hspace{3cm} (3),$$

 wobei

 C Konduktanz bezeichnet,
 K eine Konstante bei niedrigen Druckdifferenzen bezeichnet,

W die Breite des Schlitzes bezeichnet,
H der Zwischenraum des Schlitzes bezeichnet und
L die Länge des Schlitzes in Strömungsrichtung bezeichnet.

6. Verfahren nach einem der Ansprüche 1 bis 5, wobei eine Strömung von Inertgas durch die Auslassöffnung (2, 27) vorhanden ist, wobei die Strömung mindestens gleich der Strömung von Gas ist, die durch den Kamineffekt durch die Einlassöffnung (1, 26) bewirkt wird.

7. Verfahren nach Anspruch 6, wobei die Strömung von Inertgas in den Ofen noch ausreicht, auf der Grundlage der Gasverteilung nach Gleichung (2) eine Diffusionssperre an der Auslassöffnung (2, 27) der bearbeiteten Vorform zu bilden.

8. Verfahren nach Anspruch 7, wobei die Auslassöffnung (2, 27) freiere Gasströmung als die Einlassöffnung (1, 26) ermöglicht, um den größten Teil der in den Ofen (7, 23) geführten Inertgasströmung durch die Auslassöffnung zu leiten.

9. Verfahren nach einem der Ansprüche 3 bis 8, wobei die Konduktanz der Auslassöffnung (2, 27) größer als die Konduktanz der Einlassöffnung (1, 26) ist.

10. Verfahren nach einem der vorstehenden Ansprüche, wobei das in den Ofen (7, 23) geführte Inertgas gleich oder größer als die Strömung von Gas ist, die durch den Kamineffekt + 1 SLM (Normliter pro Minute), insbesondere Kamineffekt + 5 SLM (Normliter pro Minute) bewirkt wird.

11. Verfahren nach einem der vorstehenden Ansprüche, wobei die Glasvorform (3, 21) durch Zugbeanspruchung gezogen wird, um die Vorform in eine Formgestalt zu strecken, die zur Nachbearbeitung wie Ziehen von optischen Fasern geeignet ist.

12. Verfahren nach einem der Ansprüche 1 bis 10, wobei die Glasvorform (3, 21) optischem Faserziehen unterzogen wird.

13. Verfahren nach Anspruch 12, wobei der Zwischenraum zwischen dem Außendurchmesser der Glasvorform (3, 21) und dem Durchmesser der Einlassöffnung (1, 26) 0,1 bis 10 mm für eine 80-mm-Vorform beträgt.

14. Verfahren nach Anspruch 12, wobei die Sperrzone eine Länge parallel zur Ziehrichtung von 10 bis 1000 mm, vorzugsweise 15 bis 150 mm hat.

15. Verfahren nach einem der Ansprüche 1 bis 14, wobei der Ofen (7, 23) einen Graphitinduktionsofen aufweist.

16. Verfahren nach einem der vorstehenden Ansprüche, das aufweist: Drehen der Glasvorform (3, 21) um ihre Mittelachse während der Wärmebearbeitung im Ofen (7, 23).

17. Vorrichtung zum Erwärmen von Glasvorformen (3, 21), die durch Zugkräfte zu einem Glasprodukt mit vorbestimmter Formgestalt bearbeitet werden, mit:

- einem Ofenkörper (7, 23) mit einem Mantel, der eine längliche Ofenkammer mit einem mindestens im Wesentlichen kreisförmigen Querschnitt senkrecht zur Mittelachse der Kammer bildet,
- einer ersten Öffnung (1, 26) an einem Ende der Kammer zum Aufnehmen eines Endes einer Glasvorform, die zu bearbeiten ist,
- einer zweiten Öffnung (2, 27) an einem entgegengesetzten Ende der Kammer zur Entnahme des bearbeiteten Glasprodukts,
- einer Erwärmungseinrichtung (28), die in der Ofenkammer angeordnet ist, um für Erwärmung der Glasvorform im Ofen zu sorgen, und
- Zufuhrdüsen (5a, 5b, 5c), die mindestens mit der ersten Öffnung (1, 26) der Kammer verbunden sind, zum Einleiten von Schutzgasströmung in die Ofenkammer,

wobei

- die erste Öffnung (1, 26) so bemessen ist, dass eine erste Diffusionssperrzone an der ersten Öffnung (1, 26) an der Schutzgasströmung zum Verhindern von Zustrom unerwünschter gasförmiger Komponenten aus der Umgebungsluft, getrieben durch die Diffusionskräfte, in die Ofenkammer während der Erwärmung der Glasvorform gebildet ist,

**dadurch gekennzeichnet, dass**

- die erste Öffnung (1, 26) so bemessen ist, dass die Sperrzone eine Zone mit im Wesentlichen laminarer Gasströmung aufweist.

**18.** Vorrichtung nach Anspruch 17, wobei eine zweite Diffusionssperrzone an der zweiten Öffnung (2, 27) der Ofenkammer vorhanden ist.

**19.** Vorrichtung nach Anspruch 17 oder 18, wobei eine Düse (5a) zur Zufuhr von Schutzgas sowohl mit der ersten (1, 26) als auch mit der zweiten Öffnung (2, 27) und optional auch mit einer Öffnung verbunden ist, die im Mantel der Ofenkammer an einem Punkt zwischen der ersten und der zweiten Öffnung gebildet ist.

**20.** Vorrichtung nach einem der Ansprüche 17 bis 19, wobei die Vorrichtung zum Erwärmen einer Glasvorform (3, 21) geeignet ist, die optischem Faserziehen unterzogen wird.

**21.** Vorrichtung nach Anspruch 20, wobei der Zwischenraum zwischen dem Außendurchmesser der Glasvorform (3, 21) und dem Durchmesser der ersten Öffnung (1, 26) 0,1 bis 10 mm für eine 80-mm-Vorform beträgt.

**22.** Vorrichtung nach Anspruch 21, wobei die Sperrzone eine Länge parallel zur Mittelachse der Kammer von 10 bis 1000 mm, vorzugsweise 15 bis 150 mm hat.

**23.** Vorrichtung nach einem der Ansprüche 17 bis 22, wobei die Sperrzone über den Zufuhrdüsen (5a, 5b, 5c) des Schutzgases gebildet ist.

**24.** Vorrichtung nach einem der Ansprüche 17 bis 23, wobei die Sperrzone durch den Zwischenraum zwischen einer Glasvorform und der Öffnung des Ofens festgelegt ist.

**25.** Vorrichtung nach Anspruch 24, wobei die Differenz zwischen dem Außendurchmesser der Glasvorform (3, 21) und dem Innendurchmesser der Öffnung im Bereich von 0,5 bis 15 mm liegt.

**26.** Vorrichtung nach einem der Ansprüche 17 bis 25, wobei die Sperrzone eine Länge parallel zur Mittelachse des Ofens von etwa 10 bis 1000 mm, vorzugsweise etwa 15 bis 150 mm hat.

**27.** Verfahrensablauf zur Wärmebehandlung von Glassubstraten (3, 21), wobei in diesem Verfahrensablauf das Glassubstrat (3, 21) in einem ersten Gasraum einer Wärmebehandlungszone platziert wird, die von einem zweiten Umgebungsgasraum umgeben ist, wobei die Wärmebehandlungszone mit mindestens einer Gasleitung (1, 2, 26, 27) versehen ist, die den ersten und den zweiten Gasraum miteinander verbindet, **gekennzeichnet durch** Bilden einer im Wesentlichen laminare Gasströmung aufzeigenden Diffusionssperre, die Zustrom unerwünschter gasförmiger Komponenten aus der Umgebungsluft, getrieben **durch** die Diffusionskräfte, in die Wärmebehandlungszone in der mindestens einen Gasleitung (1, 2, 26, 27) verhindert, die den Gasraum innerhalb der Wärmebehandlungsvorrichtung mit dem Umgebungsgasraum verbindet, um die Leitung (1, 2, 26, 27) gegen Gasströmung in mindestens einer Richtung durch die Leitung (1, 2, 26, 27) abzudichten.

**28.** Verfahrensablauf nach Anspruch 27, der aufweist: Bilden einer Diffusionssperre gegen den Zustrom oder Auslauf unerwünschter gasförmiger Komponenten aus dem Umgebungsgasraum oder zu ihm, getrieben durch die Diffusionskräfte, durch Erzeugen einer Sperrströmung von Inertgas in mindestens einer Gasleitung, wobei die Sperrströmung eine Strömungsrichtung hat, die allgemein entgegengesetzt zur Richtung der Diffusion ist.

**29.** Verfahrensablauf nach Anspruch 27 oder 28, der aufweist: Bilden einer Diffusionssperre in jeder der Gasleitungen (1, 2, 26, 27), die den ersten und den zweiten Gasraum miteinander verbinden.

**30.** Verfahrensablauf nach einem der Ansprüche 27 bis 29, wobei die Wärmebehandlung Vorformbearbeitung durch modifizierte chemische Abscheidung aus der Dampfphase (MCVD) in einer MCVD-Drehmaschine aufweist.

**31.** Verfahrensablauf nach einem der Ansprüche 27 bis 29, wobei die Wärmebehandlung Vorformbearbeitung in einem Sinterofen aufweist.

**32.** Verfahrensablauf nach einem der Ansprüche 27 bis 31, wobei die Diffusionssperre an einer Gasleitung gebildet wird, die ein Drehgelenk aufweist.

**33.** Verfahrensablauf nach Anspruch 32, wobei das Drehgelenk ein berührungsfreies Gelenk ist.

**Revendications**

**1.** Procédé de soumission d'une préforme en verre (3, 21) à un traitement par des forces de traction dans un four afin de produire un produit en verre d'une forme prédéterminée, procédé selon lequel

- au moins une partie de la préforme en verre (3, 21) est introduite dans le four (7, 23) par une ouverture d'admission (1, 26),
- une portion de la préforme en verre (3, 21) introduite dans le four est chauffée à une température supérieure au point de ramollissement du verre,
- la portion chauffée de la préforme en verre (3, 21) est soumise à des forces de traction dans une direction d'étirage afin de traiter la préforme pour lui donner la forme prédéterminée,
- la portion de la préforme (3, 21) qui a été traitée dans la forme prédéterminée est retirée du four par une ouverture de refoulement (2, 27), et
- la portion chauffée de la préforme (3, 21) et au moins une partie de la portion traitée de la préforme sont chassées dans le four (7, 23) avec du gaz inerte qui est délivré dans le four,
- la concentration d'impuretés gazeuses dans le four est maintenue essentiellement au même niveau que la concentration des mêmes impuretés dans le gaz inerte délivré dans le four (7, 23),
- une barrière de diffusion contre l'entrée de composants gazeux non souhaités en provenance de l'air ambiant, entraînés par les forces de diffusion, est établie en générant un flux de barrière de gaz inerte dans au moins une ouverture choisie parmi ladite ouverture d'admission et ladite ouverture de refoulement (2, 27) du four, ledit flux de barrière ayant une direction de flux, qui est généralement opposée à la direction de la diffusion,

**caractérisé par**

- la génération d'un flux de barrière principalement laminaire.

**2.** Procédé selon la revendication 1, dans lequel le four (7, 23) comprend une chambre de four allongée ayant un axe central vertical, ladite barrière de diffusion étant établie dans l'ouverture d'admission (1, 26), qui est située dans l'extrémité supérieure de la chambre de four allongée.

**3.** Procédé selon la revendication 1 ou 2, dans lequel une barrière de diffusion est établie dans l'ouverture d'admission (1, 26) de la préforme en verre, dans l'ouverture d'admission de l'alimentation en gaz inerte et dans l'ouverture de refoulement (2, 27) de la préforme traitée.

**4.** Procédé selon la revendication 2, dans lequel il existe un flux à travers l'ouverture d'admission (1, 26) de la préforme en verre, lequel flux correspond à l'équation (2)

$$F1 = F*C1/(C1+C2) \qquad (2)$$

dans laquelle

F1 représente le flux gazeux passant par l'ouverture d'admission (1, 26),
F représente le flux gazeux total,
C1 représente la conductance de l'ouverture d'admission (1, 26) et
C2 représente la conductance de l'ouverture de refoulement (2, 27).

**5.** Procédé selon la revendication 4, dans lequel les ouvertures (1, 2, 26, 27) comprennent des fentes entre la préforme et des parois internes des ouvertures et chacune des conductances C1 et C2 des fentes est calculée à partir de l'équation (3)

$$C = K\ W*H^3/L,\qquad\qquad (3)$$

dans laquelle

C représente la conductance,
K est une constante à des différences de basse pression,
W est la largeur de la fente,
H est le débattement de la fente, et
L est la longueur de la fente dans la direction du flux.

6. Procédé selon l'une quelconque des revendications 1 à 5, dans lequel il existe un flux de gaz inerte passant par l'ouverture de refoulement (2, 27), lequel flux est au moins égal au flux de gaz dû à l'effet de tirage à travers l'ouverture d'admission (1, 26).

7. Procédé selon la revendication 6, dans lequel le flux de gaz inerte dans le four est encore suffisant pour former, d'après la distribution du gaz selon l'équation (2), une barrière de diffusion au niveau de l'ouverture de refoulement (2, 27) de la préforme traitée.

8. Procédé selon la revendication 7, dans lequel l'ouverture de refoulement (2, 27) permettra un flux plus libre de gaz que l'ouverture d'admission (1, 26) afin de diriger la plupart du flux de gaz inerte délivré dans le four (7, 23) à travers l'ouverture de refoulement.

9. Procédé selon l'une quelconque des revendications 3 à 8, dans lequel la conductance de l'ouverture de refoulement (2, 27) est supérieure à la conductance de l'ouverture d'admission (1, 26).

10. Procédé selon l'une quelconque des revendications précédentes, dans lequel le gaz inerte délivré dans le four (7, 23) est égal ou supérieur au flux de gaz dû à l'effet de tirage + 1 litre standard par minute (SLM), en particulier à l'effet de tirage + 5 SLM (litre standard par minute).

11. Procédé selon l'une quelconque des revendications précédentes, dans lequel la préforme en verre (3, 21) est soumise à une tension d'étirage afin d'étirer la préforme en une forme adaptée pour un post-traitement tel l'étirage de fibres optiques.

12. Procédé selon l'une quelconque des revendications 1 à 10, dans lequel la préforme en verre (3, 21) est soumise à un étirage de fibre optique.

13. Procédé selon la revendication 12, dans lequel le débattement entre le diamètre extérieur de la préforme en verre (3, 21) et le diamètre d'ouverture d'admission (1, 26) est de 0,1 à 10 mm pour une préforme de 80 mm.

14. Procédé selon la revendication 12, dans lequel la zone barrière a une longueur parallèle à la direction d'étirage s'élevant de 10 à 1 000 mm, de préférence de 15 à 150 mm.

15. Procédé selon l'une quelconque des revendications 1 à 14, dans lequel le four (7, 23) comprend un four à induction en graphite.

16. Procédé selon l'une quelconque des revendications précédentes,, comprenant l'étape consistant à faire tourner la préforme en verre (3, 21) autour de son axe central pendant le traitement thermique dans le four (7, 23).

17. Appareil de chauffage de préformes en verre (3, 21) qui sont traitées par des forces de traction en un produit en verre d'une forme prédéterminée, comprenant :

- un corps de four (7, 23) ayant une chemise de four définissant une chambre de four allongée avec une section au moins essentiellement circulaire perpendiculaire à l'axe central de la chambre,
- une première ouverture (1, 26) à une extrémité de la chambre pour recevoir une extrémité d'une préforme en verre, qui doit être traitée,

- une seconde ouverture (2, 27) au niveau d'une extrémité opposée de la chambre pour un retrait du produit en verre traité,
- un moyen de chauffage (28) monté à la chambre de four afin de fournir un chauffage de la préforme en verre dans le four, et
- des buses d'alimentation (5a, 5b, 5c) raccordées à au moins la première ouverture (1, 26) de la chambre afin d'introduire un flux gazeux protecteur dans la chambre de four,

dans lequel

- la première ouverture (1, 26) est dimensionnée de sorte qu'une première zone de barrière de diffusion est formée au niveau de la première ouverture (1, 26) au niveau dudit flux de gaz protecteur afin d'éviter une entrée de composants gazeux non souhaités en provenance de l'air ambiant, entraînés par les forces de diffusion, dans la chambre de four pendant le chauffage de la préforme gazeuse,

**caractérisé en ce que**

- la première ouverture (1, 26) est dimensionnée de sorte que la zone barrière comprend une zone de flux gazeux principalement laminaire.

18. Appareil selon la revendication 17, dans lequel il existe une seconde zone de barrière de diffusion au niveau de la seconde ouverture (2, 27) de la chambre de four.

19. Appareil selon la revendication 17 ou 18, dans lequel une buse (5a) pour l'alimentation en gaz protecteur est raccordée à la fois à la première (1, 26) et à la seconde (2, 27) ouverture et, facultativement, également à une ouverture formée dans la chemise de la chambre de four en un point entre les première et seconde ouvertures.

20. Appareil selon l'une quelconque des revendications 17 à 19, dans lequel l'appareil est adapté pour chauffer une préforme en verre (3, 21) soumise à un étirage de fibre optique.

21. Appareil selon la revendication 20, dans lequel le débattement entre le diamètre extérieur de la préforme en verre (3, 21) et le diamètre de la première ouverture (1, 26) est de 0,1 à 10 mm pour une préforme de 80 mm.

22. Appareil selon la revendication 21, dans lequel la zone de barrière a une longueur parallèle à l'axe central de la chambre s'élevant de 10 à 1 000 mm, de préférence de 15 à 150 mm.

23. Appareil selon l'une quelconque des revendications 17 à 22, dans lequel la zone barrière est formée au-dessus des buses d'alimentation (5a, 5b, 5c) du gaz protecteur.

24. Appareil selon l'une quelconque des revendications 17 à 23, dans lequel la zone barrière est définie par le débattement entre une préforme en verre et l'ouverture du four.

25. Appareil selon la revendication 24, dans lequel la différence entre le diamètre externe de la préforme en verre (3, 21) et le diamètre interne de l'ouverture est dans la page de 0,5 à 15 mm.

26. Appareil selon l'une quelconque des revendications 17 à 25, dans lequel la zone barrière a une longueur parallèle à l'axe central du four s'élevant à environ 10 à 1 000 mm, de préférence d'environ 15 à 150 mm.

27. Procédé de traitement thermique de substrats de verre (3, 21), dans lequel procédé le substrat de verre (3, 21) est placé dans un premier espace gazeux d'une zone de traitement thermique, entouré par un second espace gazeux ambiant, ladite zone de traitement thermique étant dotée d'au moins un conduit de gaz (1, 2, 26, 27) interconnectant les premier et second espaces gazeux, **caractérisé par** la formation d'une barrière de diffusion présentant principalement un flux de gaz laminaire empêchant l'entrée de composants gazeux non souhaités en provenance du gaz ambiant, entraînés par les forces de diffusion, dans la zone de traitement thermique dans ledit au moins un conduit de gaz (1, 2, 26, 27) interconnectant l'espace gazeux à l'intérieur du dispositif de traitement thermique avec l'espace gazeux ambiant afin d'étancher le conduit (1, 2, 26, 27) vis-à-vis d'un flux de gaz dans au moins une direction à travers le conduit (1, 2, 26, 27).

28. Procédé selon la revendication 27, comprenant l'étape consistant à établir une barrière de diffusion contre l'entrée ou la sortie de composants gazeux non souhaités en provenance ou vers l'espace gazeux, entraînés par les forces de diffusion, en générant un flux de barrière de gaz inerte dans au moins un dit conduit de gaz, ledit flux de barrière ayant une direction de flux, qui est généralement opposée à la direction de la diffusion.

29. Procédé selon la revendication 27 ou 28, comprenant l'étape consistant à établir une barrière de diffusion dans chacun des conduits de gaz (1, 2, 26, 27) interconnectant les premier et second espaces gazeux.

30. Procédé selon l'une quelconque des revendications 1 à 29, dans lequel le traitement thermique comprend le traitement d'une préforme par dépôt chimique modifié en phase vapeur (MCVD de l'anglais Modified Chemical Vapour Deposition) dans un tour MCVD.

31. Procédé selon l'une quelconque des revendications 27 à 29, dans lequel le traitement thermique comprend le traitement de la préforme dans un four de frittage.

32. Procédé selon l'une quelconque des revendications 27 à 31, dans lequel la barrière de diffusion est établie au niveau d'un conduit de gaz comprenant un joint rotatif.

33. Procédé selon la revendication 32, dans lequel le joint rotatif est un joint sans contact.

EP 1 567 457 B1

Fig.1

Fig.2

**Fig. 3**

**Fig. 4**

**Fig. 5a**

**Fig. 5b**

**Fig. 6**

**Fig. 7**

**(a)**  **(b)**  **(c)**

**(e)**  **(f)**

**Fig. 8**

**Fig. 9**  **Fig. 10**

$$P_0$$

$$h$$

$$P_1$$

$$T_1$$

$$P_{out}$$

$$P_2$$

$$T_2$$

$$P_{in}$$

# Fig. 11

Fig. 12

**Fig. 13**

**Fig. 14**

**Fig. 15**

**Fig. 16**

**EP 1 567 457 B1**

**REFERENCES CITED IN THE DESCRIPTION**

**Patent documents cited in the description**

- JP 55020260 A
- US 4477274 A
- DE 3903466
- DE 4006839
- US 4174842 A
- US 5970083 A
- US 5897681 A
- JP 60081039 A
- JP 57140330 A
- US 6192715 B